# EUROPEAN PATENT APPLICATION

(11) **EP 1 873 922 A1**
(43) Date of publication of application: **02.01.2008**
(21) Application number: 06810861.2
(22) Date of filing: 29.09.2006
(51) Int. Cl.: H04B 1/16, H04B 1/10, H04N 5/44

(54) **RECEIVING APPARATUS**

(30) Priority: 03.10.2005 JP 2005289790
(71) Applicant: MATSUSHITA ELECTRIC INDUSTRIAL CO., LTD., Osaka 571-8501 (JP)
(72) Inventor: OKADA, Eiji Matsushita Electric Industrial Co.,Ltd, Osaka-shi, Osaka 540-6319 (JP); OZEKI, Hiroaki Matsushita Electric Industrial Co.,Ltd, Osaka-shi, Osaka 540-6319 (JP)
(74) Representative: Pautex Schneider, Nicole Véronique
(86) International application number: PCT/JP2006/319463
(87) International publication number: WO 2007/040176

(57) **Abstract**

A receiver includes a frequency controller coupled to an input terminal of a sampling signal generator, and the frequency controller controls a frequency of a sampling signal based on a signal supplied from a positional information acquiring section. This structure allows eliminating a detection of an interfering signal, and controlling the frequency of the sampling signal supplied to an AD converter based on the signal from the positional information acquiring section. As a result, the receiver can reduce its power consumption.

## Description

### TECHNICAL FIELD

The present invention relates to a receiver for receiving digital terrestrial broadcasting.

### BACKGROUND ART

Japanese Patent Unexamined Publication No. H08 - 88608 discloses an AD converting circuit prepared for supplying a received intermediate frequency signal to a digital signal processing circuit. When this AD converting circuit detects an interfering signal in the frequency of a signal having undergone the sampling process, this AD converting circuit selects a sampling frequency corresponding to another frequency having no interfering signal.

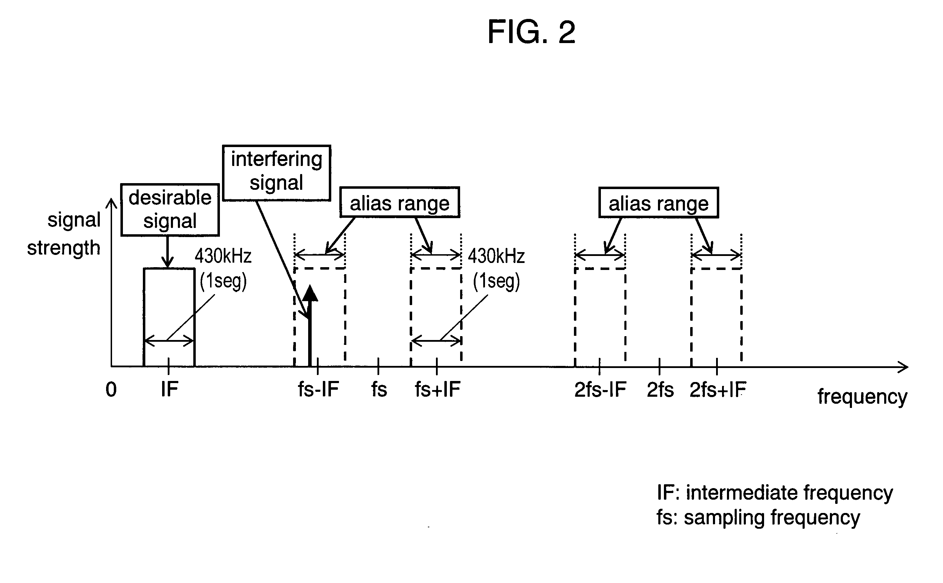

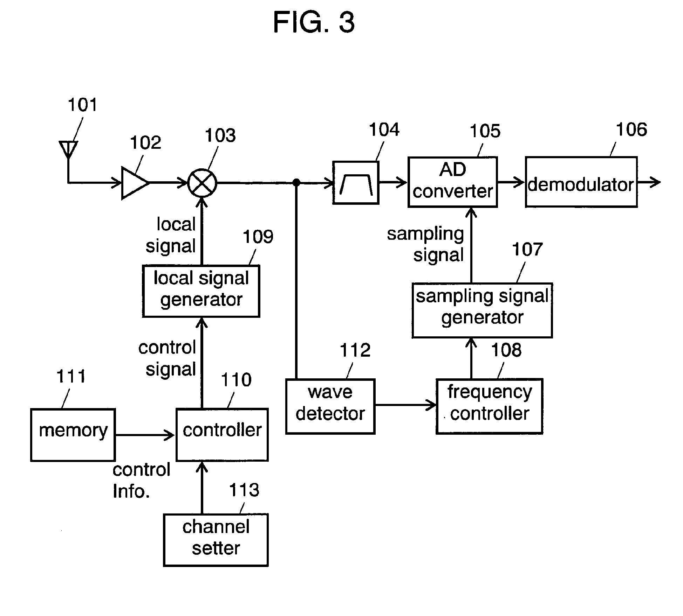

A conventional digital terrestrial broadcasting receiver is described hereinafter with reference to Figs. 2 and 3. Fig. 2 shows a spectrum illustrating the frequency relation between a desirable signal and an interfering signal prior to the AD conversion. Fig. 3 shows a block diagram of the conventional receiver. In Fig. 3, antenna 101 outputs a signal to a first input terminal of mixer 103, which outputs a signal to intermediate frequency filter 104, and then filter 104 outputs a signal to a first input terminal of AD converter 105, which outputs a signal to demodulator 106. A second input terminal of mixer 103 is coupled to local signal generator 109, and mixer 103 thus outputs a mixed signal of a local signal and the input signal supplied from antenna 101 as an intermediate frequency signal. Local signal generator 109 is controlled its oscillating frequency by a control signal supplied from controller 110. This control signal is generated based on control information which is read from memory 111 by using the channel information and the segment information supplied from channel setter 113. Sampling signal generator 107 outputs a sampling signal to a second input terminal of AD converter 105. Frequency controller 108 supplies a frequency control signal of the sampling signal to an input terminal of sampling signal generator 107.

In the foregoing structure, when the adjacent channel or the channel next to the adjacent channel to a desirable channel is not sufficiently attenuated by intermediate frequency filter 104, and if these channels not sufficiently attenuated exist within an alias range, signals in those channels become interfering signals. In other words, when a signal exists in the frequency range of integral multiples of sampling frequency ± frequency band of a desirable signal, the signal is frequency-converted by the sampling signal into the frequency band of the desirable signal, and the signal becomes an interfering signal. As a result, the desirable signal cannot be reproduced even it has undergone the AD conversion. Due to this fact, when the adjacent channel or the next to the adjacent channel carries analog terrestrial broadcasting signal in particular, a desirable attenuated amount by intermediate frequency filter 104 becomes greater. Because both of a digital broadcasting and an analogue broadcasting co-exist, a transmission power of the digital broadcasting is set low enough for the digital broadcasting signal so as not to interfere with the analog broadcasting signal.

To prevent the desirable attenuated amount by intermediate frequency filter 104 from becoming greater, wave detector 112 is coupled to an output terminal of mixer 103 for detecting an interfering signal. Frequency controller 108 is coupled to an output terminal of wave detector 112 in order to control a sampling frequency supplied from sampling signal generator 107 when wave detector 112 detects the presence of an interfering signal.

However, the conventional receiver needs to detect an interfering signal at the upper and lower adjacent channels to a desired channel as well as the upper and lower channels next to these adjacent channels, namely at four channels in total, so that the power consumption becomes inevitably greater.

### DISCLOSURE OF INVENTION

A receiver includes an AD converter, a sampling signal generator, a frequency controller, and a positional information acquiring section. The AD converter receives and converts an analog signal having a frequency of an intermediate frequency band into a digital signal. The sampling signal generator supplies a sampling signal to the AD converter. The frequency controller supplies a control signal to the sampling signal generator for controlling the frequency of the sampling signal. The positional information acquiring section supplies positional information to the frequency controller in order to control the frequency of the sampling signal. This structure allows the receiver to lower its power consumption.

### BRIEF DESCRIPTION OF THE DRAWINGS

Fig. 1 shows a block diagram of a receiver in accordance with an embodiment of the present invention.
Fig. 2 shows a spectrum illustrating a relation to the frequencies between a desirable signal prior to an AD conversion and an interfering signal.
Fig. 3 shows a block diagram of a conventional receiver of prior art.

### DESCRIPTION OF REFERENCE MARKS

- 1: antenna
- 2: high-frequency amplifier
- 3: mixer
- 4: intermediate frequency filter
- 5: AD converter
- 6: demodulator
- 7: sampling signal generator
- 8: frequency controller
- 9: positional information acquiring section
- 10: channel setter
- 11: memory

### PREFERRED EMBODIMENT OF THE INVENTION

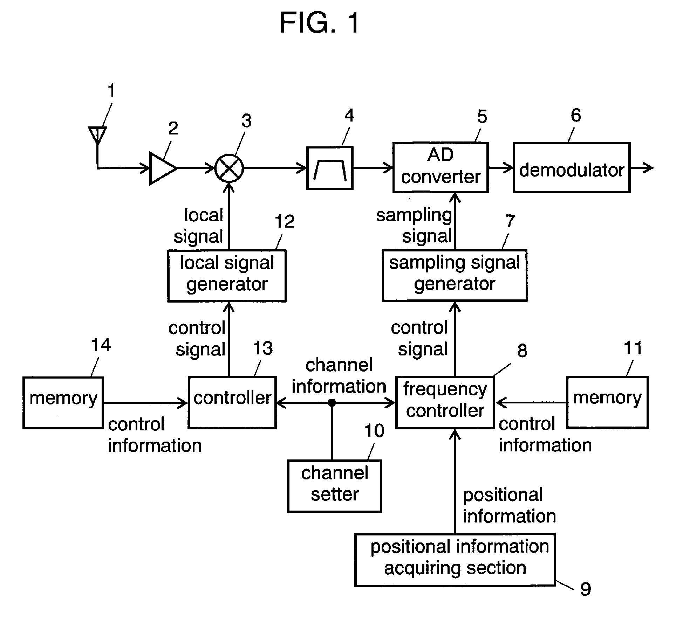

Fig. 1 shows a block diagram of a receiver in accordance with an embodiment of the present invention. In Fig. 1, antenna 1 is hooked up to the following elements at its output terminal in this order: an input filter (not shown), high-frequency amplifier 2, mixer 3, intermediate frequency filter 4, and an intermediate frequency amplifier (not shown). AD converter 5 is coupled to an output terminal of the intermediate frequency amplifier, and demodulator 6 is coupled to an output terminal of AD converter 5, which receives and converts an analog signal having a frequency of the intermediate frequency band into a digital signal. Sampling signal generator 7 (hereinafter referred to simply as generator 7) is coupled to another input terminal of AD converter 5 for supplying a sampling signal, and frequency controller 8 is coupled to an input terminal of generator 7 for controlling the frequency of the sampling signal. Frequency controller 8 includes three input terminals which are respectively coupled to an output terminal of positional information acquiring section 9, an output terminal of channel setter 10 (hereinafter referred to simply as setter 10), and an output terminal of memory 11.

Positional information acquiring section 9 is formed of, e.g. a GPS (Global Positioning System) receiver, and acquires a present position of the receiver. Since the GPS receiver can acquire the positional information from a GPS satellite, the receiver can be used worldwide.

Setter 10 is formed of, e.g. a microprocessor to be used in a television receiver. Setter 10 transmits the information about a channel and a segment selected by a user to frequency controller 8 controlling generator 7 as well as controller 13 controlling local signal generator 12.

Meanwhile controller 13 controls local signal generator 12 by using the channel information discussed above and the control information supplied from memory 14.

**TABLE 1**

| | Channel (S: segment) | | | | | | | | | | | | | | | UNIT |
|---|---|---|---|---|---|---|---|---|---|---|---|---|---|---|---|---|
| O S A K A | 7 | | | | | | | | 13 | 14 | 15 | 16 | 17 | 18 | 24 | Ch |
| | S1 | S2 | S3 | S4 | S5 | S6 | S7 | S8 | - | - | - | - | - | - | - | Seg |
| | 2.5 | 2.3 | 2.2 | 2.5 | 2.3 | 2.8 | 2.8 | 2.1 | 2.0 | 2.0 | 2.0 | 2.0 | 2.5 | 2.5 | 2.0 | MHz |
| K Y O T O | 7 | | | | | | | | 13 | 14 | 15 | 16 | 17 | 18 | 24 | Ch |
| | S1 | S2 | S3 | S4 | S5 | S6 | S7 | S8 | - | - | - | - | - | - | - | Seg |
| | | | | | | | | | | | | | | | | MHz |

| | | | | | | | | | | | | | | | | |
|---|---|---|---|---|---|---|---|---|---|---|---|---|---|---|---|---|
| Ch: channel information Seg: segment information MHz: sampling frequency | | | | | | | | | | | | | | | | |

Memory 11 is formed of, e.g. ROM, EEPROM, or flash memory, and stores the table as shown in Table 1. This table contains the information about controlling over the sampling signal generator with respect to digital terrestrial broadcasting channels and the segments in respective prefectures.

The foregoing table is drawn this way: First, determine whether or not an analog broadcasting channel exists in the adjacent channels and the channels next to the adjacent channels to the respective digital broadcasting channels based on the channel plan of the digital terrestrial broadcasting and analog broadcasting in the respective prefectures. For instance, the channel plan shown in table 2 tells that channel 6 and channel 8 of analog broadcasting exist as adjacent channels to channel 7 of digital broadcasting available in OSAKA.

**TABLE 2**

| | Digital | | | | | | | | Analog | | | | | | | | |
|---|---|---|---|---|---|---|---|---|---|---|---|---|---|---|---|---|---|
| Osaka | 7 | 13 | 14 | 15 | 16 | 17 | 18 | 24 | 2 | 4 | 6 | 8 | 10 | 12 | 19 | 34 | 36 |
| Kyoto | | | | | | | | | | | | | | | | | |
| Hyogo | | | | | | | | | | | | | | | | | |
| | | | | | | | | | | | | | | | | | |

Table 2 also tells that channels 5 and 9 of analog broadcasting do not exist as the channels next to the adjacent channels. Then the relation between the sampling frequencies shown in table 3 with respect to the presence of analog broadcastings tells that what frequency is adequate to the sampling signal.

For instance, according to the table shown in table 3, when the receiver receives the first segment (S1) of VHF channel 7, and at this time, only the adjacent channel exists, then the frequency of the sampling signal should be 2.4 MHz. The frequencies shown in table 3 of the sampling signals are determined by comprehensive consideration for a desirable attenuated amount of an interfering signal in the adjacent channel or the channel next to the adjacent one and the power consumption of generator 7. As discussed above, table 1 is drawn by considering the channel plan shown in table 2 and the table shown in table 3.

**TABLE 3**

| Channel | Segment | Sampling Frequency | | | |
|---|---|---|---|---|---|
| | | Adjacent + next to the adjacent channels exist | Only adjacent channels exists | Only channels next to the adjacent exist | N/A |
| UHF: 13-62 | - | 3.0MHz | 2.5MHz | 2.2MHz | 2.0MHz |
| VHF : 7 | S1 | 2.5MHz | 2.4MHz | 2.0MHz | |
| | S2 | 2.3MHz | 2.3MHz | 2.1MHz | |
| | S3 | 2.2MHz | 2.1MHz | 2.0MHz | |
| | S4 | 2.5MHz | 2.5MHz | 2.1MHz | |
| | S5 | 2.3MHz | 2.2MHz | 2.1MHz | |
| | S6 | 2.8MHz | 2.8MHz | 2.0MHz | |
| | S7 | 2.8MHz | 2.7MHz | 2.1MHz | |
| | S8 | 2.1MHz | 2.1MHz | 2.0MHz | |

Meanwhile, the analog terrestrial broadcasting has gradually undergone frequency conversion, and the digital terrestrial broadcasting has undergone its transmission power increment step by step, so that the tables stored in memory 11 should be updated accordingly. The tables can be updated through wireless communication devices such as wireless LAN, communication line of portable terminal, Bluetooth (Bluetooth is trademark owned by Bluetooth SIG Inc.), or replaceable external memory such as SD memory.

The table shown in table 1 is used in receiving one segment, thus when the receiver receives three segments, the table for receiving three segments should be prepared.

Frequency controller 8 determines a frequency of the sampling signal supplied from generator 7 by referring to the tables stored in memory 11 based on the receiver's positional information supplied from positional information acquiring section 9 and the segment information together with the channel information supplied from setter 10.

The foregoing structure does not need a detection of an interfering signal for the receiver to control the frequency of the sampling signal fed into AD converter 5 based on the signal supplied from positional information acquiring section 9. As a result, the power consumption can be lowered, and the determination on the presence of a signal of the adjacent channel or a signal of the channel next to the adjacent channel can be done more quickly.

Positional information acquiring section 9 can acquire the positional information about the receiver via the communication line of a portable terminal. In this case the signal supplied from positional information acquiring section 9 contains the information supplied from the base station. Positional information acquiring section 9 can thus acquire positional information even at a place such as underground where the radio wave from the GPS satellite cannot reach. When it is determined, according to the signal from acquiring section 9 and the signal from setter 10 and the table shown in table 1 stored in memory 11, that the adjacent channel and the channel next to the adjacent channel do not exist, the order of filter 4 can be lowered. The lowering of the order of filter 4 is, namely, equal to relaxing the slope of the attenuation characteristics in the adjacent channel and the channel next to the adjacent channel, or equal to decreasing the attenuated amount of the signal in the adjacent channel and the channel next to the adjacent channel. When it is determined that the adjacent channel and the channel next to the adjacent channel exist, the order of filter 4 can be restored. The change in the filter characteristics thus allows reducing the power consumption in filter 4 provided that the need for attenuating the signal in the adjacent channel and the signal in the channel next to the adjacent channel is not so great.

As discussed above, the receiver can set the frequency of the sampling signal to be supplied to AD converter 5 as an optimum one based on the signal supplied from positional information acquiring section 9 without detecting an interfering signal. As a result, the power consumption can be reduced.

### INDUSTRIAL APPLICABILITY

The receiver of the present invention can reduce its power consumption and can be used as a portable terminal and the like.

## Claims

1. A receiver comprising:
an AD converter for receiving an analog signal which has a frequency in an intermediate frequency band, and converting the analog signal into a digital signal;
a sampling signal generator to be coupled to the AD converter for supplying a sampling signal to the AD converter;
a frequency controller to be coupled to the sampling signal generator for supplying a control signal, which controls a frequency of the sampling signal, to the sampling signal generator; and
a positional information acquiring section to be coupled to the frequency controller for supplying positional information to the frequency controller in order to control the frequency of the sampling signal.

2. The receiver of claim 1, wherein the positional information acquiring section is a GPS receiver.

3. The receiver of claim 1, wherein the positional information acquiring section acquires positional information via a communication line of a portable terminal.

4. The receiver of claim 1 further comprising a filter coupled to the AD converter, and characteristics of the filter can be changed based on a signal supplied from the positional information acquiring section.

5. The receiver of claim 1 further comprising:
a channel setter for supplying channel information to the frequency controller; and
a memory for storing a table which includes sampling signals with respect to channels and segments of digital terrestrial broadcasting in respective prefectures, and supplying information included in the table to the frequency controller,
wherein the frequency controller refers to the table by using the positional information and the channel information for determining a frequency of the sampling signals.
